# EUROPEAN PATENT APPLICATION

(11) **EP 4 458 474 A1**
(43) Date of publication of application: **06.11.2024**
(21) Application number: 22915509.8
(22) Date of filing: 28.10.2022
(51) Int. Cl.: B03B 5/36

(54) **PURIFICATION APPARATUS**

(30) Priority: 28.12.2021 JP 2021213667
(71) Applicant: Shimadzu Corporation, Nakagyo-ku, Kyoto-shi, Kyoto 604-8511 (JP)
(72) Inventor: TERADA, Masaaki, Kyoto-shi, Kyoto 604-8511 (JP)
(74) Representative: Kilian Kilian & Partner mbB
(86) International application number: PCT/JP2022/040299
(87) International publication number: WO 2023/127276

(57) **Abstract**

A purification apparatus (1) includes a container (50) where a sample is to be accommodated, a heating apparatus (71) arranged below the container, the heating apparatus configured to heat the sample accommodated in the container, a heat conduction plate (91) arranged between the container and the heating apparatus, the heat conduction plate having a first main surface thermally connected to the container and a second main surface thermally connected to the heating apparatus and located opposite to the first main surface, and a sealing member (93) peripherally arranged around the container on the first main surface.

## Description

### TECHNICAL FIELD

The present disclosure relates to a purification apparatus that purifies a sample.

### BACKGROUND ART

A technique to collect a component by purification of a sample has conventionally been known. For example, NPL 1 discloses a method of collecting microplastic by purification of aquatic sediments. In the method of collecting microplastic disclosed in NPL 1, a standpipe is attached to a container where the aquatic sediments are accommodated and a filter holder is attached to the standpipe with a ball valve being interposed. The aquatic sediments accommodated in the container are separated by introduction of decomposition fluid while they are stirred by a rotor arranged below the container, and thereafter a fluid level rises by addition of decomposition fluid so that microplastic can be collected.

### CITATION LIST

### NON PATENT LITERATURE

NPL 1: "A novel, highly efficient method for the separation and quantification of plastic particles in sediments of aquatic environments," [Searched on December 10, 2021], the Internet <URL:https://aslopubs.onlinelibrary.wiley.com/doi/epdf/10.4319/lom.2012.10.524>

### SUMMARY OF INVENTION

### TECHNICAL PROBLEM

According to the method of collecting microplastic disclosed in NPL 1, microplastic can be collected from the aquatic sediments. During treatment of fluid such as the aquatic sediments, however, fluid being treated may leak to the outside through between the container and the standpipe or through the filter holder. When fluid that leaks from the container spills over a rotor apparatus arranged below the container, the rotor apparatus may malfunction, which may result in such an unfavorable condition as lowering in accuracy in purification of the sample.

The present disclosure was made to solve such a problem, and an object thereof is to provide a technique to prevent occurrence of an unfavorable condition due to fluid leakage during purification of a sample.

### SOLUTION TO PROBLEM

A purification apparatus according to one aspect of the present disclosure includes a container where the sample is to be accommodated, a heating apparatus arranged below the container, the heating apparatus configured to heat the sample accommodated in the container, a heat conduction plate arranged between the container and the heating apparatus, the heat conduction plate having a first main surface thermally connected to the container and a second main surface thermally connected to the heating apparatus and located opposite to the first main surface, and a sealing member peripherally arranged around the container on the first main surface.

### ADVANTAGEOUS EFFECTS OF INVENTION

According to the present disclosure, even when fluid leakage from the container occurs during purification of the sample, the heat conduction plate and the sealing member can prevent fluid from spilling over the heating apparatus, and hence occurrence of an unfavorable condition due to fluid leakage can be prevented.

### BRIEF DESCRIPTION OF DRAWINGS

Fig. 1 is a diagram schematically showing a purification apparatus according to an embodiment.
Fig. 2 is a diagram showing a construction of a purification instrument according to the embodiment.
Fig. 3 is a diagram for illustrating a hardware configuration of the purification apparatus according to the embodiment.
Fig. 4 is a flowchart of purification processing performed by the purification apparatus according to the embodiment.
Fig. 5 is a cross-sectional view of the purification instrument according to the embodiment.
Fig. 6 is an enlarged cross-sectional view of a part of the purification instrument according to the embodiment.

### DESCRIPTION OF EMBODIMENTS

The present embodiment will be described in detail with reference to the drawings. The same or corresponding elements in the drawings have the same reference characters allotted and description thereof will not be repeated in principle.

### [Main Configuration of Purification Apparatus]

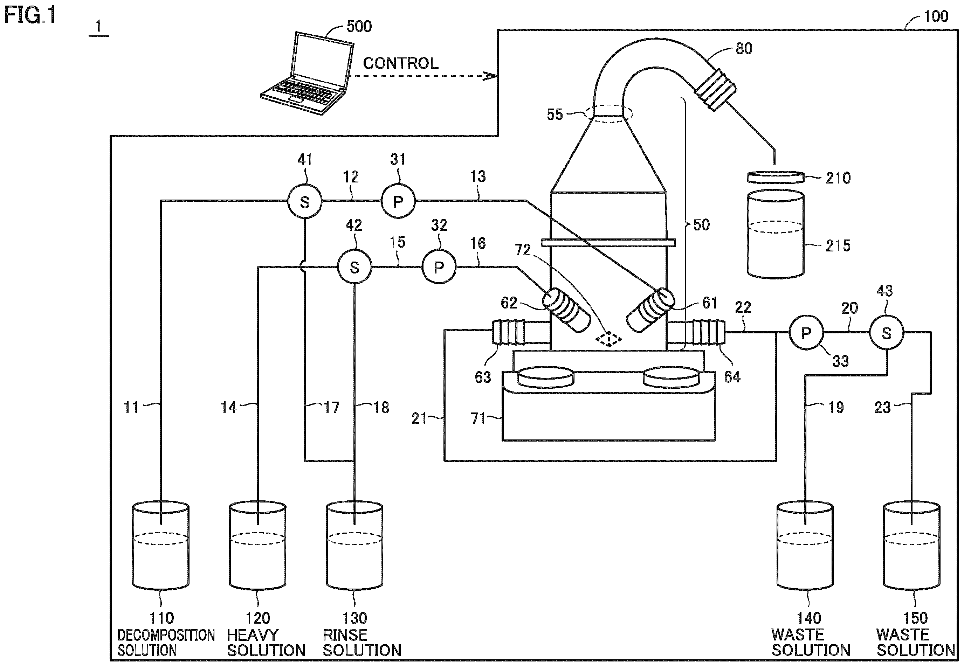

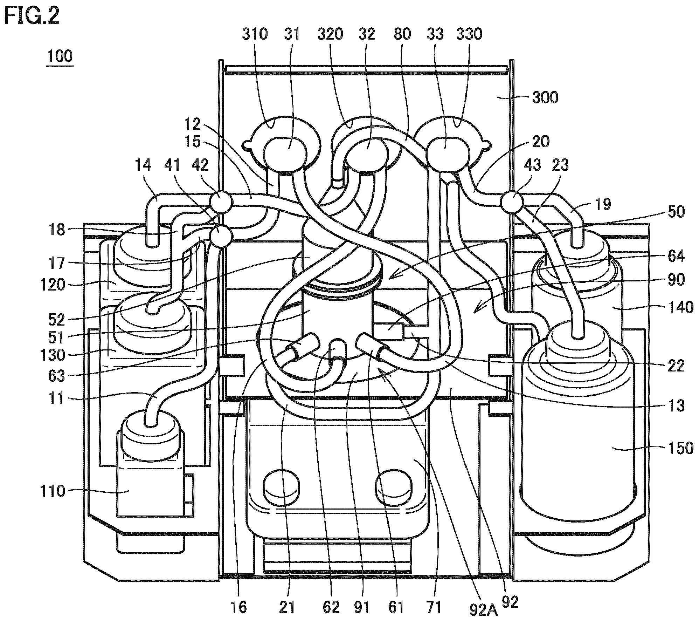

A main configuration of a purification apparatus 1 according to an embodiment and a purification instrument 100 included in purification apparatus 1 will be described with reference to Figs. 1 and 2. Fig. 1 is a diagram schematically showing purification apparatus 1 according to the embodiment. Fig. 2 is a diagram showing a construction of purification instrument 100 according to the embodiment.

As shown in Fig. 1, purification apparatus 1 includes purification instrument 100 that purifies a mixed sample and a control device 500 that controls purification instrument 100. Purification apparatus 1 according to the embodiment purifies the mixed sample under the control of purification instrument 100 by control device 500 to collect a component to be collected that is contained in the mixed sample. "Purification" encompasses taking a pure substance (component) out of a mixture.

Anything containing a component to be collected may be applicable as a "mixed sample" to be purified by purification apparatus 1. Exemplary "mixed samples" include seawater and sand collected from the sea or the seashore and processed products such as food and cosmetics. In the embodiment, seawater and sand collected from the sea or the seashore represent an exemplary "mixed sample." The "mixed sample" is also simply referred to as a "sample" below.

Any component to be collected by purification apparatus 1 may be applicable as the "component" to be collected by purification apparatus 1. Exemplary "components" include microplastic which is fine plastic particles having a size not larger than 5 mm. In the embodiment, microplastic contained in seawater and sand collected from the sea or the seashore represents an exemplary "component".

As shown in Figs. 1 and 2, purification instrument 100 includes a container 50 where a sample is accommodated, pipes 11 to 22, pumps 31 to 33, electromagnetic valves 41 to 43, ports 61 to 64, a stirrer 71, a stirring bar 72, a discharge pipe 80, a decomposition solution reservoir 110, a heavy solution reservoir 120, a rinse solution reservoir 130, waste solution reservoirs 140 and 150, a detection filter 210, a supernatant reservoir 215, and a casing 300.

Container 50 includes a first member 51 and a second member 52 located above first member 51, and is dividable into first member 51 and second member 52. A user can put a sample in the inside of first member 51 by separating second member 52 from first member 51 and can have the sample accommodated in container 50 by connecting second member 52 to first member 51 with the use of a fixing tool (not shown). In container 50 according to the embodiment, first member 51 is formed in a shape of a column with a circular bottom surface. The bottom surface of first member 51 is not limited to the circular surface but may be in another shape such as a polygonal shape or an oval shape.

Pipe 11 connects decomposition solution reservoir 110 and electromagnetic valve 41 to each other. Pipe 12 connects electromagnetic valve 41 and pump 31 to each other. Pipe 13 connects pump 31 and port 61 provided in an outer circumferential portion of container 50 to each other. Decomposition solution reservoir 110 and port 61 of container 50 are thus connected to each other through pipes 11, 12, and 13 with electromagnetic valve 41 and pump 31 being interposed.

Pipe 14 connects heavy solution reservoir 120 and electromagnetic valve 42 to each other. Pipe 15 connects electromagnetic valve 42 and pump 32 to each other. Pipe 16 connects pump 32 and port 62 provided in the outer circumferential portion of container 50 to each other. Heavy solution reservoir 120 and port 62 of container 50 are thus connected to each other through pipes 14, 15, and 16 with electromagnetic valve 42 and pump 32 being interposed.

Pipe 17 connects rinse solution reservoir 130 and electromagnetic valve 41 to each other. In other words, while electromagnetic valve 41 is connected to decomposition solution reservoir 110 through pipe 11, it is connected also to rinse solution reservoir 130 through pipe 14. Rinse solution reservoir 130 and port 61 of container 50 are thus connected to each other through pipes 17, 12, and 13 with electromagnetic valve 41 and pump 31 being interposed.

Pipe 18 connects rinse solution reservoir 130 and electromagnetic valve 42 to each other. In other words, while electromagnetic valve 42 is connected to heavy solution reservoir 120 through pipe 14, it is connected also to rinse solution reservoir 130 through pipe 18. Rinse solution reservoir 130 and port 62 of container 50 are thus connected to each other through pipes 18, 15, and 16 with electromagnetic valve 42 and pump 32 being interposed.

Pipe 19 connects waste solution reservoir 140 and electromagnetic valve 43 to each other. Pipe 20 connects electromagnetic valve 43 and pump 33 to each other. Pipe 21 connects pump 33 and port 63 provided in the outer circumferential portion of container 50 to each other. Waste solution reservoir 140 and port 63 of container 50 are thus connected to each other through pipes 19, 20, and 21 with electromagnetic valve 43 and pump 33 being interposed.

Pipe 22 connects pump 33 and port 64 provided in the outer circumferential portion of container 50 to each other. In other words, while pump 33 is connected to port 63 of container 50 through pipe 21, it is connected also to port 64 of container 50 through pipe 22. Waste solution reservoir 140 and port 64 of container 50 are thus connected to each other through pipes 19, 20, and 22 with electromagnetic valve 43 and pump 33 being interposed.

A pipe 23 connects waste solution reservoir 150 and electromagnetic valve 43 to each other. In other words, while electromagnetic valve 43 is connected to waste solution reservoir 140 through pipe 19, it is connected also to waste solution reservoir 150 through pipe 23. Waste solution reservoir 150 and port 63 of container 50 are thus connected to each other through pipes 23, 20, and 21 with electromagnetic valve 43 and pump 33 being interposed. Waste solution reservoir 150 and port 64 of container 50 are connected to each other through pipes 23, 20, and 22 with electromagnetic valve 43 and pump 33 being interposed.

A decomposition solution for treatment of a contaminant is stored in decomposition solution reservoir 110. The "contaminant" refers to a foreign matter in the mixed sample, other than a component to be collected. In the embodiment, an exemplary "contaminant" includes an organic contaminant having a property of an organic substance. Any "decomposition solution" may be applicable so long as the contaminant is decomposed therewith. In the embodiment, the "decomposition solution" decomposes an organic contaminant. An exemplary "decomposition solution" includes an oxidizing agent such as oxygenated water (H2O2) and a mixture of oxygenated water (H2O2) and iron (II) oxide (FeO). When seawater and sand are adopted as the "mixed sample," exemplary "organic contaminants" include a scrap piece of wood mixed in seawater or sand and planktons.

A heavy solution for separation of a sample based on a specific gravity difference is stored in heavy solution reservoir 120. Any heavy solution may be applicable so long as the "heavy solution" separates the sample based on the specific gravity difference. In the embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnCl2). When seawater and sand are adopted as the "mixed sample," exemplary "inorganic contaminants" include sand, glass, and stone. A specific gravity of the "heavy solution" is set to be greater than a specific gravity of the "component" to be collected by purification apparatus 1 and to be smaller than a specific gravity of the "inorganic contaminant." For example, when microplastic is adopted as the "component" to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

A rinse solution for cleaning of the inside of container 50 is stored in rinse solution reservoir 130. Any rinse solution may be applicable so long as the inside of container 50 is cleaned with the "rinse solution." An exemplary "rinse solution" includes water. The "rinse solution" plays a role to clean the inside of container 50 and a role to dilute the decomposition solution introduced into container 50.

A waste solution discharged from container 50 such as the heavy solution, the rinse solution, and sea water contained in the mixed sample is stored in waste solution reservoirs 140 and 150.

Pump 31 introduces the decomposition solution suctioned from decomposition solution reservoir 110 or the rinse solution suctioned from rinse solution reservoir 130 into container 50 through port 61 under the control by control device 500.

Pump 32 introduces the heavy solution suctioned from heavy solution reservoir 120 or the rinse solution suctioned from rinse solution reservoir 130 into container 50 through port 62 under the control by control device 500.

Pump 33 discharges the waste solution suctioned from container 50 through port 63 or port 64 to waste solution reservoir 140 or waste solution reservoir 150 under the control by control device 500.

Electromagnetic valve 41 switches a path to be connected to port 61 between a path between decomposition solution reservoir 110 and port 61 of container 50 (a path through pipes 11, 12, and 13) and a path between rinse solution reservoir 130 and port 61 of container 50 (a path through pipes 17, 12, and 13) under the control by control device 500.

Electromagnetic valve 42 switches a path to be connected to port 62 between a path between heavy solution reservoir 120 and port 62 of container 50 (a path through pipes 14, 15, and 16) and a path between rinse solution reservoir 130 and port 62 of container 50 (a path through pipes 18, 15, and 16) under the control by control device 500.

Electromagnetic valve 43 switches a path to be connected to ports 63 and 64 between a path between waste solution reservoir 140 and ports 63 and 64 of container 50 (a path through pipes 19, 20, and 21 or a path through pipes 19, 20, and 22) and a path between waste solution reservoir 150 and ports 63 and 64 of container 50 (a path through pipes 23, 20, and 21 or a path through pipes 23, 20, and 22) under the control by control device 500.

Port 61 is an exemplary "first port." The decomposition solution in decomposition solution reservoir 110 or the rinse solution in rinse solution reservoir 130 suctioned by pump 31 is introduced into container 50 through port 61. Port 62 is an exemplary "second port." The heavy solution in heavy solution reservoir 120 or the rinse solution in rinse solution reservoir 130 suctioned by pump 32 is introduced into container 50 through port 61. Ports 63 and 64 are each an exemplary "discharge port." The waste solution in container 50 suctioned by pump 33 is discharged to waste solution reservoir 140 or waste solution reservoir 150 through ports 63 and 64.

In the inside of each of ports 61 to 64, a filter (not shown) is provided not to allow discharge from container 50, of a component contained in the sample. The filter is a mesh having a mesh size small enough to trap microplastic to be collected. The filter (mesh) is, for example, a wire gauze made of steel use stainless (SUS) or a membrane filter made of polytetrafluoroethylene (PTFE) (Teflon^{™}). When microplastic is to be collected, the mesh size of the filter (mesh) should be small enough not to allow passage therethrough of a particle having a size of 0.1 to 5.0 mm, and the mesh size is preferably approximately 0.1 mm.

Stirrer 71 is an exemplary "heating apparatus." Stirrer 71 is, for example, a magnetic constant-temperature stirrer, and arranged below container 50. Stirrer 71 generates magnetic force under the control by control device 500 to rotate stirring bar 72 provided in container 50. Stirring bar 72 stirs the sample in container 50 by rotation or vibration upon receiving magnetic force from stirrer 71.

Furthermore, stirrer 71 keeps a temperature of the sample in container 50 constant by heating container 50 from below container 50 under the control by control device 500. A temperature of stirrer 71 is set approximately to 60°C to 70°C, and fluid in container 50 heated by stirrer 71 in accordance with a setting temperature is kept at approximately 50°C. Though purification apparatus 1 according to the embodiment includes stirrer 71 as the "heating apparatus," an apparatus that simply heats the sample without stirring the sample in container 50 may be employed as the "heating apparatus."

Discharge pipe 80 is an exemplary "discharge portion." Discharge pipe 80 is connected to a discharge port 55 provided at an uppermost portion of container 50, and a supernatant of the sample that flows over container 50 is discharged therethrough to the outside.

Detection filter 210 collects the component to be collected that is contained in the supernatant of the sample discharged through discharge pipe 80 by filtering the supernatant. The supernatant that has passed through detection filter 210 is collected in supernatant reservoir 215. Detection filter 210 is a mesh having a mesh size small enough to trap microplastic to be collected. Detection filter 210 (mesh) is, for example, a wire gauze made of steel use stainless (SUS) or a membrane filter made of polytetrafluoroethylene (PTFE). When microplastic is to be collected, the mesh size of detection filter 210 (mesh) should be small enough not to allow passage therethrough of a particle having a size of 0.1 to 5.0 mm, and the mesh size is preferably approximately 0.1 mm.

Container 50 and stirrer 71 are accommodated in casing 300. Casing 300 is provided with openings 310, 320, and 330 for arrangement of respective pumps 31, 32, and 33.

Control device 500 may be implemented by a general-purpose computer or a dedicated computer for controlling purification instrument 100. Control device 500 controls pumps 31 to 33, electromagnetic valves 41 to 43, and stirrer 71 in purification instrument 100.

Pumps 31 to 33 each include a motor (not shown) and a valve (not shown). Control device 500 controls the motor. The motor opens or closes the valve under the control by control device 500. Pumps 31 to 33 thus suction or deliver various types of fluid.

Electromagnetic valves 41 to 43 each include a valve (not shown). Control device 500 controls the valve to open and close. Electromagnetic valves 41 to 43 thus switch a path through which various types of fluid pass.

Stirrer 71 includes a motor (not shown), a magnet (not shown), and a heater (not shown). Control device 500 controls the motor. The motor rotates the magnet under the control by control device 500. Magnetic force of the magnet thus rotates stirring bar 72 in container 50. Furthermore, control device 500 activates the heater (not shown) to apply certain heat to container 50.

### [Hardware Configuration of Purification Apparatus]

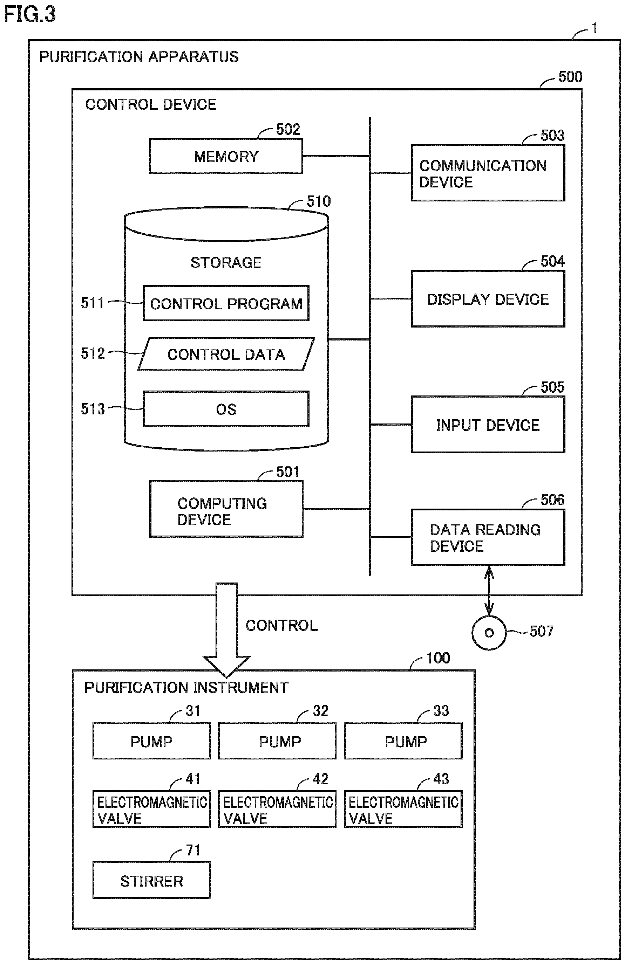

A hardware configuration of purification apparatus 1 according to the embodiment will be described with reference to Fig. 3. Fig. 3 is a diagram for illustrating a hardware configuration of purification apparatus 1 according to the embodiment. As shown in Fig. 3, control device 500 includes, as main hardware elements thereof, a computing device 501, a memory 502, a communication device 503, a display device 504, an input device 505, a data reading device 506, and a storage 510.

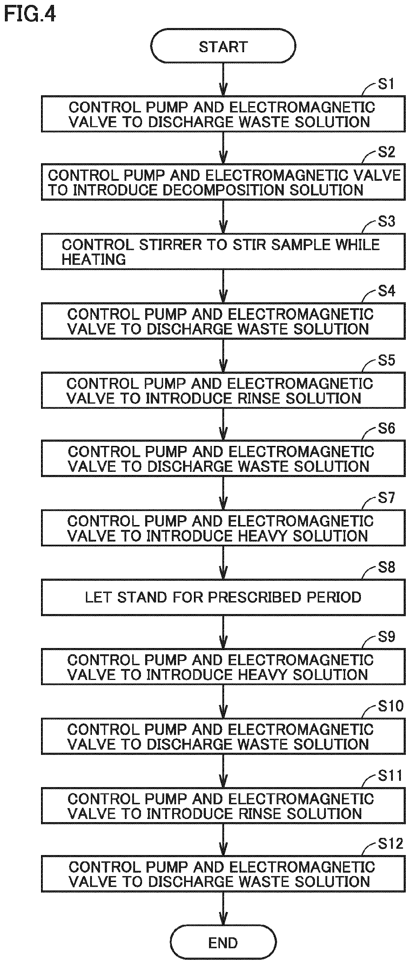

Computing device 501 is a computer that reads a program (for example, a control program 511 and an operating system (OS) 513) stored in storage 510 and develops the read program on memory 502 to execute the same. For example, computing device 501 performs purification processing (which will be described later with reference to Fig. 4) for controlling purification instrument 100 by executing control program 511. Computing device 501 is implemented, for example, by a central processing unit (CPU), a field programmable gate array (FPGA), a graphics processing unit (GPU), a multi processing unit (MPU), or the like. Computing device 501 may be implemented by processing circuitry.

Memory 502 provides a storage area where a program code or a work memory is temporarily stored in execution of any program by computing device 501. Memory 502 is implemented by a volatile memory such as a dynamic random access memory (DRAM) or a static random access memory (SRAM) or a non-volatile memory such as a read only memory (ROM) or a flash memory.

Communication device 503 transmits and receives data to and from another device over a network (not shown). Communication device 503 is in conformity with any communication scheme such as Ethernet^{®}, wireless local area network (LAN), and Bluetooth^{®}.

Display device 504 is implemented, for example, by a liquid crystal display (LCD), and shows a program design screen or an alert screen on the occurrence of an abnormal condition.

Input device 505 is implemented, for example, by a keyboard, a mouse, or the like, and used for input of design information by a user in design of a program. Input device 505 may include a start switch for starting purification processing by computing device 501.

Data reading device 506 reads data stored in a storage medium 507. Any storage medium such as a compact disc (CD), a digital versatile disc (DVD), or a universal serial bus (USB) memory may be applicable so long as various types of data can be stored in storage medium 507.

Storage 510 provides a storage area where various types of data required for purification processing or the like are stored. Storage 510 is implemented, for example, by a non-volatile memory device such as a hard disk drive (HDD) or a solid state drive (SSD). Control program 511, control data 512, and OS 513 are stored in storage 510.

Control program 511 is a program in which contents of purification processing are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of each of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [Sample Purification Processing]

Sample purification processing performed by purification apparatus 1 will now be described with reference to Fig. 4. Fig. 4 is a flowchart of purification processing performed by purification apparatus 1 according to the embodiment. Each step shown in Fig. 4 is performed by execution of OS 513 and control program 511 by computing device 501 of control device 500. "S" in the drawings is used as abbreviation of "STEP".

For preparation, a user introduces a sample into container 50 of purification apparatus 1. For example, the user separates the first member from the second member to open container 50 to inject the sample into container 50. Thereafter, the user performs a start operation with the use of input device 505 of control device 500 to start control of purification instrument 100 by control device 500.

When control device 500 starts control of purification instrument 100, as shown in Fig. 4, control device 500 controls pump 33 and electromagnetic valve 43 to discharge the waste solution in container 50 to waste solution reservoir 150 through pipes 20 to 23 and ports 63 and 64 (S1). Microplastic or the like to be collected that is contained in the sample remains in container 50 without being discharged to the outside, owing to the filter provided in the inside of ports 63 and 64.

Control device 500 then deactivates pump 33 on a discharge side and controls pump 31 and electromagnetic valve 41 to introduce the decomposition solution in decomposition solution reservoir 110 into container 50 through pipes 11 to 13 and port 61 (S2).

Control device 500 then controls stirrer 71 to rotate stirring bar 72 provided in container 50 to stir the sample while certain heat is applied to container 50 (S3). A temperature of container 50 and a rotation speed and a rotation time period of stirring bar 72 are set in advance by the user. As the sample is thus stirred, oxidation treatment with an oxidizing agent is performed and an organic contaminant contained in the sample is decomposed. Though heating is not necessarily required during stirring of the sample, decomposition by oxidation treatment tends to be accelerated by the temperature of the sample maintained constant by heating.

Control device 500 then controls pump 33 and electromagnetic valve 43 to discharge the waste solution in container 50 included in the sample in which the organic contaminant has been decomposed to waste solution reservoir 150 through pipes 20 to 23 and ports 63 and 64 (S4). Microplastic or the like to be collected that is contained in the sample remains in container 50 without being discharged to the outside, owing to the filter provided in the inside of ports 63 and 64.

Control device 500 then deactivates pump 33 on the discharge side and controls pump 31 and electromagnetic valve 41 to introduce the rinse solution in rinse solution reservoir 130 into container 50 through pipes 17, 12, and 13 and port 61 to clean the inside of container 50 (S5). At this time, control device 500 controls an amount of suction by pump 31 to introduce the rinse solution in an amount set in advance by the user into container 50.

Control device 500 then controls pump 33 and electromagnetic valve 43 to discharge the waste solution in container 50 into which the rinse solution has been introduced to waste solution reservoir 150 through pipes 20 to 23 and ports 63 and 64 (S6). The inside of container 50 is thus cleaned with the rinse solution. Microplastic or the like to be collected that is contained in the sample remains in container 50 without being discharged to the outside, owing to the filter provided in the inside of ports 63 and 64. Thereafter, control device 500 may let the sample stand as it is for a prescribed period (for example, for one day) to dry the sample.

Control device 500 then controls pump 32 and electromagnetic valve 42 to introduce the heavy solution in heavy solution reservoir 120 into container 50 through pipes 14 to 16 and port 62 (S7). At this time, control device 500 controls the amount of suction by pump 32 to introduce the heavy solution in an amount set in advance by the user into container 50.

Thereafter, control device 500 lets the sample stand as it is for a prescribed period (for example, for one to three hours) (S8). As the heavy solution is thus introduced into the sample in container 50 and let stand, an inorganic contaminant contained in the sample settles around the bottom of container 50 owing to the specific gravity difference.

Control device 500 then again controls pump 32 and electromagnetic valve 42 to again introduce the heavy solution in heavy solution reservoir 120 into container 50 through pipes 14 to 16 and port 62 (S9). At this time, control device 500 controls the amount of suction by pump 32 to introduce the heavy solution in the amount set in advance by the user into container 50. As the heavy solution is thus introduced again into the sample in container 50, a fluid level of the sample separated based on the specific gravity gradually rises in container 50 and the supernatant of the sample soon reaches discharge port 55 of container 50. Then, the supernatant of the sample is discharged to the outside through discharge port 55 and discharge pipe 80.

The supernatant of the sample discharged through discharge pipe 80 is filtered by detection filter 210, and only the waste solution is collected in supernatant reservoir 215. Microplastic which is the component lighter in specific gravity than the heavy solution remains at detection filter 210.

After microplastic is collected as a result of purification of the sample, control device 500 has container 50 cleaned as post-treatment. Specifically, control device 500 controls pump 33 and electromagnetic valve 43 to discharge the waste solution in container 50 from which microplastic has been collected to waste solution reservoir 140 through pipes 19 to 22 and ports 63 and 64 (S10).

Control device 500 then deactivates pump 33 on the discharge side and controls pump 32 and electromagnetic valve 42 to introduce the rinse solution in rinse solution reservoir 130 into container 50 through pipes 18, 15, and 16 and port 62 to clean the inside of container 50 (S11). At this time, control device 500 controls the amount of suction by pump 32 to introduce the rinse solution in the amount set in advance by the user into container 50.

Control device 500 then controls pump 33 and electromagnetic valve 43 to discharge the waste solution in container 50 into which the rinse solution has been introduced to waste solution reservoir 140 through pipes 19 to 22 and ports 63 and 64 (S12). The inside of container 50 is thus cleaned with the rinse solution.

As set forth above, according to purification apparatus 1 according to the embodiment, control device 500 automatically has the decomposition solution and the heavy solution introduced into the sample accommodated in container 50 at appropriate timing for an appropriate time period, or has the waste solution discharged from container 50. Therefore, the user himself/herself does not have to introduce the decomposition solution and the heavy solution into container 50 or to discharge the waste solution from container 50. Thus, time and efforts by the user are not required, there is no possibility of variation in accuracy in collection of microplastic depending on skills of the user, and the user can accurately purify the sample without spending time and efforts.

Furthermore, according to purification apparatus 1 according to the embodiment, after microplastic is collected, control device 500 has used container 50 automatically cleaned. Therefore, the user himself/herself does not have to clean container 50.

### [Construction of Support Portion]

As described above, during purification of the sample, while stirrer 71 arranged below container 50 stirs the sample in container 50, the sample is heated. At this time, possibility of leakage of fluid being treated from container 50 to the outside during purification of the sample should also be taken into consideration. For example, as shown in Fig. 2, container 50 is dividable into first member 51 and second member 52. Fluid leakage, however, from a portion of connection between first member 51 and second member 52 or through ports 63 and 64 for discharge of the waste solution may occur. When fluid that leaks from container 50 spills over stirrer 71 provided below container 50, stirrer 71 may malfunction, which may result in such an unfavorable condition as lowering in accuracy in purification of the sample.

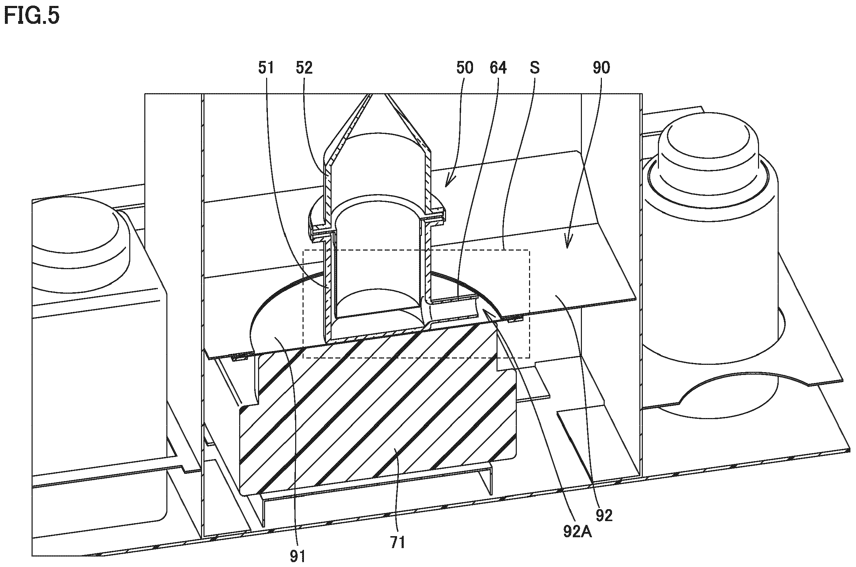

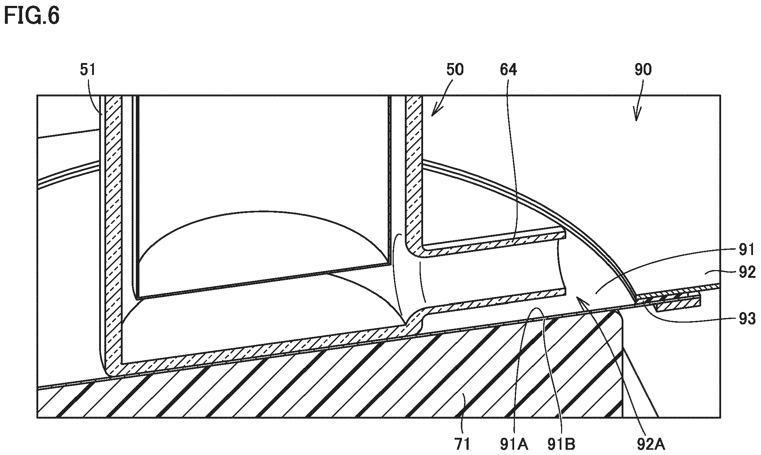

Purification apparatus 1 according to the embodiment is configured to prevent the unfavorable condition due to fluid leakage as described above. Prevention of fluid leakage in purification apparatus 1 according to the embodiment will be described below with reference to Figs. 5 and 6.

Fig. 5 is a cross-sectional view of purification instrument 100 according to the embodiment. Fig. 6 is an enlarged cross-sectional view of a part of purification instrument 100 according to the embodiment. Fig. 5 shows a cross-sectional view when purification instrument 100 shown in Fig. 2 is cut in an upward-downward direction (for example, a vertical direction). Fig. 6 shows an enlarged view of a portion S shown with a dashed line in Fig. 5.

As shown in Figs. 5 and 6, purification instrument 100 of purification apparatus 1 further includes a support portion 90. Support portion 90 is provided in casing 300 and includes a heat conduction plate 91, a support plate 92, and a sealing member 93.

Heat conduction plate 91 is arranged between a bottom surface of container 50 and an upper surface of stirrer 71. Heat conduction plate 91 has a first main surface 91A (for example, a front surface) thermally connected to the bottom surface of container 50 and has a second main surface 91B (for example, a rear surface) thermally connected to the upper surface of stirrer 71. Specifically, first main surface 91A is in contact with the bottom surface of container 50 and/or second main surface 91B is in contact with the upper surface of stirrer 71. Heat conduction plate 91 is composed of a non-magnetic element with heat conduction capability, such as aluminum. Magnetic force from stirrer 71 thus conducts to stirring bar 72 in container 50 through heat conduction plate 91 so that stirring bar 72 rotates and the sample in container 50 is efficiently heated by heat from stirrer 71.

Support plate 92 is arranged above first main surface 91A of heat conduction plate 91 and arranged as being stacked on first main surface 91A around container 50 on first main surface 91A of heat conduction plate 91. Specifically, support plate 92 is provided with an opening 92A provided to surround the bottom surface of container 50. An area of opening 92A is larger than an area of the bottom surface of container 50. As shown in Fig. 2, the bottom surface of container 50 (the bottom surface of first member 51) according to the embodiment is in a circular shape, and opening 92A is in a circular shape larger in area than the bottom surface of container 50 (the bottom surface of first member 51).

Container 50 is arranged substantially in a central portion of opening 92A and provided on first main surface 91A of heat conduction plate 91 with opening 92A being interposed. Opening 92A is not limited to an opening in the circular shape, and may be in another shape such as a polygonal shape or an oval shape. Furthermore, opening 92A may be provided in conformity with the bottom surface of first member 51. For example, when the bottom surface of first member 51 is in a quadrangular shape, opening 92A may be in a quadrangular shape larger in area than the bottom surface of first member 51.

Support plate 92 is composed of a material relatively low in thermal conductivity such as steel use stainless (SUS), and it is lower in thermal conductivity than heat conduction plate 91 composed of aluminum.

Sealing member 93 is peripherally arranged around container 50 on first main surface 91A of heat conduction plate 91. Specifically, as shown in Fig. 6, sealing member 93 is arranged as being interposed in a gap between first main surface 91A and support plate 92. Since opening 92A in support plate 92 according to the embodiment is circular, the gap between first main surface 91A and support plate 92 is also annular. In other words, sealing member 93 is annularly arranged in the gap between first main surface 91A and support plate 92. Sealing member 93 is composed of a thermally insulating material such as silicon.

According to purification instrument 100 constructed as described above, heat conduction plate 91 is interposed between container 50 and stirrer 71. Therefore, even when fluid leaks from container 50 during purification of the sample, heat conduction plate 91 can prevent fluid from spilling over stirrer 71. Furthermore, thermally insulating sealing member 93 is provided in the gap between heat conduction plate 91 and support plate 92. Therefore, even when fluid leaks from container 50 during purification of the sample, sealing member 93 can prevent fluid from entering the gap between heat conduction plate 91 and support plate 92. In other words, fluid that leaks from container 50 remains on first main surface 91A of heat conduction plate 91, in opening 92A. Furthermore, since sealing member 93 is thermally insulating, heat from heat conduction plate 91 heated by stirrer 71 is less likely to conduct to support plate 92. Therefore, heat can efficiently conduct to container 50.

### [Aspects]

Illustrative embodiments described above are understood by a person skilled in the art as specific examples of aspects below.

(Clause 1) A purification apparatus according to one aspect includes a container where the sample is to be accommodated, a heating apparatus arranged below the container, the heating apparatus configured to heat the sample accommodated in the container, a heat conduction plate arranged between the container and the heating apparatus, the heat conduction plate having a first main surface thermally connected to the container and a second main surface thermally connected to the heating apparatus and located opposite to the first main surface, and a sealing member peripherally arranged around the container on the first main surface.

According to the purification apparatus according to Clause 1, even when fluid leaks from the container during purification of the sample, the heat conduction plate and the sealing member can prevent fluid from spilling over the heating apparatus and hence occurrence of an unfavorable condition due to fluid leakage can be prevented.

(Clause 2) The first main surface is in contact with the container and/or the second main surface is in contact with the heating apparatus.

According to the purification apparatus according to Clause 2, the sample accommodated in the container can efficiently be heated by the heating apparatus with the heat conduction plate being interposed.

(Clause 3) The purification apparatus further includes a support plate arranged as being stacked on the first main surface around the container on the first main surface. The sealing member is arranged in a gap between the first main surface and the support plate.

According to the purification apparatus according to Clause 3, even when fluid leaks from the container during purification of the sample, the sealing member can prevent fluid from entering the gap between the heat conduction plate and the support plate.

(Clause 4) In the purification apparatus, the sealing member is thermally insulating.

According to the purification apparatus according to Clause 4, even when fluid leaks from the container during purification of the sample, the thermally insulating sealing member can prevent heat from conducting to the support plate.

(Clause 5) In the purification apparatus, the heating apparatus is a constant-temperature stirrer. The purification apparatus further includes a stirring bar provided in the inside of the container, the stirring bar stirring the sample with magnetic force from the heating apparatus. The heat conduction plate is a non-magnetic element.

According to the purification apparatus according to Clause 5, the sample in the container can be stirred by rotation by the heating apparatus, of the stirring bar in the container with the heat conduction plate being interposed.

(Clause 6) The purification apparatus further includes a discharge port provided in the container for discharge of a waste solution in the container.

According to the purification apparatus according to Clause 6, even when fluid discharged through the port leaks, the heat conduction plate can prevent fluid from spilling over the heating apparatus.

(Clause 7) In the purification apparatus, the container is dividable into a first member and a second member.

According to the purification apparatus according to Clause 7, even when fluid leaks from a dividable portion of the container, the heat conduction plate can prevent fluid from spilling over the heating apparatus.

(Clause 8) The purification apparatus further includes a first port for introduction into the container, of a decomposition solution for treatment of a contaminant contained in the sample, a second port for introduction into the container, of a heavy solution for separation of the sample based on a specific gravity difference, a discharge portion for discharge of a supernatant produced by introduction of the heavy solution to the outside of the container, and a control device that controls introduction of the decomposition solution through the first port and introduction of the heavy solution through the second port.

According to the purification apparatus according to Clause 8, even when fluid leaks from the container during purification of the sample in the purification apparatus that automatically purifies the sample under the control by the control device, the heat conduction plate and the sealing member can prevent fluid from spilling over the heating apparatus.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 purification apparatus; 11, 12, 13, 14, 15, 16, 17, 18, 19, 20, 21, 22, 23 pipe; 31, 32, 33 pump; 41, 42, 43 electromagnetic valve; 50 container; 51 first member; 52 second member; 55 discharge port; 61, 62, 63, 64 port; 71 stirrer; 72 stirring bar; 80 discharge pipe; 90 support portion; 91 heat conduction plate; 91A first main surface; 91B second main surface; 92 support plate; 92A, 310, 320, 330 opening; 93 sealing member; 100 purification instrument; 110 decomposition solution reservoir; 120 heavy solution reservoir; 130 rinse solution reservoir; 140, 150 waste solution reservoir; 210 detection filter; 215 supernatant reservoir; 300 casing; 500 control device; 501 computing device; 502 memory; 503 communication device; 504 display device; 505 input device; 506 device; 507 storage medium; 510 storage; 511 control program; 512 control data

## Claims

1. A purification apparatus that purifies a sample, the purification apparatus comprising:
a container where the sample is to be accommodated;
a heating apparatus arranged below the container, the heating apparatus configured to heat the sample accommodated in the container;
a heat conduction plate arranged between the container and the heating apparatus, the heat conduction plate having a first main surface thermally connected to the container and a second main surface thermally connected to the heating apparatus and located opposite to the first main surface; and
a sealing member peripherally arranged around the container on the first main surface.

2. The purification apparatus according to claim 1, wherein
the first main surface is in contact with the container and/or the second main surface is in contact with the heating apparatus.

3. The purification apparatus according to claim 1, further comprising a support plate arranged as being stacked on the first main surface around the container on the first main surface, wherein
the sealing member is arranged in a gap between the first main surface and the support plate.

4. The purification apparatus according to claim 3, wherein
the sealing member is thermally insulating.

5. The purification apparatus according to claim 1, wherein
the heating apparatus is a constant-temperature stirrer,
the purification apparatus further comprises a stirring bar provided in inside of the container, the stirring bar stirring the sample with magnetic force from the heating apparatus, and
the heat conduction plate is a non-magnetic element.

6. The purification apparatus according to claim 1, further comprising a discharge port provided in the container for discharge of a waste solution in the container.

7. The purification apparatus according to claim 1, wherein
the container is dividable into a first member and a second member.

8. The purification apparatus according to claim 1, further comprising:
a first port for introduction into the container, of a decomposition solution for treatment of a contaminant contained in the sample;
a second port for introduction into the container, of a heavy solution for separation of the sample based on a specific gravity difference;
a discharge portion for discharge of a supernatant produced by introduction of the heavy solution to outside of the container; and
a control device that controls introduction of the decomposition solution through the first port and introduction of the heavy solution through the second port.
